# EUROPEAN PATENT APPLICATION

(11) **EP 3 789 285 A1**
(43) Date of publication of application: **10.03.2021**
(21) Application number: 20194691.0
(22) Date of filing: 04.09.2020
(51) Int. Cl.: B62K 19/34, B62M 3/00, B62M 6/55

(54) **DRIVE SYSTEM FOR AN ELECTRIC BICYCLE**

(30) Priority: 06.09.2019 GB 201912875
(71) Applicant: High Performance Systems Limited, Road Town, Tortola (VG)
(72) Inventor: GILL, Dan, 98000 Monaco (MC); GIBBINGS, Henry, Monaco (MC)
(74) Representative: Barker Brettell LLP

(57) **Abstract**

An electric bike drive system comprising: an electric motor having a stator and a rotor which is configured to be secured relative to a bicycle frame, an elongate tubular sleeve having first and second opposing end portions; a torque transfer system having an input side fixed relative to the motor rotor, an output side fixed relative to the sleeve, and a coupling between the input side and output side for transferring torque from the motor rotor through the coupling to the sleeve; in which each end portion of the sleeve is provided with at least one internal groove or recess for receiving adhesive that in use secures the sleeve to a spindle that in turn is connectable to a crankset.

## Description

This invention relates to a drive system for an electric bicycle.

An electric bicycle, sometimes called an e-bike, is a type of bicycle which includes a battery powered electric motor that provides a propulsive force. The motor may be arranged to only provide an assistance force when a sensor detects that the rider is pedalling and an electric bike of this kind is commonly known as a pedelec. Alternatively, the motor may provide an assistance force independent of the rider applying a force, the rider controlling the motor using a switch on the handlebars. In both cases the rider may still apply a force themselves to assist the motor or to propel the bicycle when the motor is not in use or the battery is flat.

Anyone who can ride a regular bicycle can ride an electric bicycle. Propulsion is provided by the rider turning a pair of cranks that together with a chainwheel form a crankset. As is well known in the art of bicycles a pedal is attached to each crank that allows the rider to rotate the cranks using their feet. Turing the cranks turns the chainwheel which in turn drives the rear wheel of the electric bicycle with the force being transmitted to the rear wheel through a chain or a belt. A freewheel is typically provided at the rear wheel so that the rear wheel can continue to rotate when the rider stops pedalling.

In most older forms of electric bike, the motor of an electric bike is relatively large and is located in a hub of the front or rear wheel, or may apply a force directly onto the rear tyre of the bicycle through a roller. The battery, which in earlier bikes was a heavy lead-acid type battery, would be fixed to a pannier rack at the rear of the bicycle.

More recently electric bikes have been produced in which the motor is hidden inside the frame of the bicycle and applies a torque onto the crankset. The motor may be located in an oversized down tube, or may be located inside the seat tube which provides a very clean appearance. Power for the motor is provided by a battery which may be disguised as a drinks bottle that fits within a drinks bottle holder secured to the frame by Allen bolts.

The applicant has appreciated that a problem with the prior art electric bicycles which use an in-frame motor is that the connection of the motor to the crankset requires a bespoke axle, ruling out the use of the majority of off the shelf crankset componentry and ruling out a simple DIY conversion of a regular bicycle to an electric bicycle. Existing drive systems of this kind are also bulky requiring extensive modification to the bicycle frame to accommodate the component parts and are hard to service in the field due to the need for specialist tools and a lot of components in the drivetrain.

An objection of the present invention is to provide an electric bike drive system that ameliorates these problems with prior art.

According to a first aspect the invention provides an electric bike drive system comprising:
An electric motor having a stator and a rotor which is configured to be secured relative to a bicycle frame,
An elongate tubular sleeve having first and second opposing end portions;
A torque transfer system having an input side fixed relative to the motor rotor, an output side fixed relative to the sleeve, and a coupling between the input side and output side for transferring torque from the motor rotor through the coupling to the sleeve;
in which each end portion of the sleeve is provided with at least one internal recess such as a groove for receiving adhesive that in use secures the sleeve to a bottom bracket spindle.

The groove may extend circumferentially around the inside of the sleeve, or may extend axially along the sleeve. The groove may be elongate or may have a circular profile or other shape. Circumferential grooves are preferred as they help form a relatively rigid ring of adhesive which helps prevent the sleeve moving axially relative to the spindle.

In some arrangements, rather than a groove the end portion may be roughened to form a net of small pockets into which the adhesive will flow and help key to the sleeve.

The internal wall of the sleeve may comprise opposed end portions which each have a first inner diameter and a central portion between the end portions which has a second larger diameter. At least the end wall portions may be cylindrical.

The external wall of the sleeve may have a diameter at each end portion and between the end portions may include a central portion which has a larger diameter than the end portions, a respective region between each end portion and the centre portion being of reduced diameter.

The sleeve may be a metal material such as aluminium or steel or another alloy.

The internal diameter of the end portions of the sleeve may be chosen to be slightly oversized relative to the external diameter of the spindle to allow room for a thin layer of adhesive to form. An example of a suitable internal diameter for the end portion is 23.96mm with grooves of a depth of approximately 8mm. Provided the size is correct, and type of spindles may be used including the types that are fixed permanently at one end to a chainset of a crank assembly, and one piece spindles such as those sold by SRAM under the trademark SRAM RED, or a two piece split spindle of the type sold by Campagnolo and under the trademark Ultra-torque ®.

Each end portion may have one groove, but preferably more than one and most preferably three grooves are provided at each end portion.

By adhesive we mean any material that can be used to prevent relative movement between the sleeve and spindle. The adhesive may be a resin and may generally but not exclusively be a non-metallic material. The adhesive may be applied in an uncured or semi cured state and when ready for use may be partly or fully cured. It may form a permanent or releasable bond between the sleeve and the spindle.

The torque transfer system may comprise a gearset comprising a first bevel attached to the rotor of the motor, and a second bevel gear which is fixed to the sleeve, the first bevel gear meshing with the second bevel gear with the axes of the two gears intersecting.

The second bevel gear may comprise a ring of teeth that extend at a constant radius around the axis of rotation of the sleeve.

The torque transfer system may include a one way clutch which is located in a load path between the second gear and the sleeve so that only torque of one sign can only pass from the second gear to the sleeve through the clutch and torque of the opposite sign is not transferred to the sleeve. This means that the motor will only provide assistance to turn the spindle in one direction and only when the second gear is rotating faster than the spindle. At all other times the clutch will decouple the sleeve and the second gear.

The clutch may comprise an annular sprag clutch. This may be arranged concentrically with the sleeve with a first bearing race fixed to the sleeve and a second fixed to the second gear. The second gear may be integral to the second bearing race.

As an alternative to a sprag clutch a ratchet mechanism may be used of the kind found in the freewheel cassette of a bicycle.

The electric bike drive system may include a locating means for fixing the position of the sleeve relative to a bottom bracket of the bicycle. This may comprise a locating ring which is fixed to the bottom bracket, a spacer, and a thrust berating assembly where the spacer is located between the thrust bearing assembly and the locating ring, and the needle bearing is located between the spacer and the one way clutch.

The spacer may comprise a tubular spacer that fits around the sleeve and is supported by the locating ring so that it does not contact any part of the sleeve.

The locating ring may include a recess on a side facing away from the spacer that defines a seat for receiving a bearing race that supports the spindle of a crankset in position within the bottom bracket. This bearing race may be a conventional outboard bearing race.

The locating ring may include an external thread which engages with a complimentary thread on an end of the bottom bracket of the bicycle whereby the relative position of the locating ring can be set by turning the ring within the bottom bracket to wind it in and out of thread of the bottom bracket.

The electric bike drive system may include a pair of cranks, each located outside of the bottom bracket as it conventional for a bicycle. The spindle may be integral with one of the cranks on a drive side of the bottom bracket.

The drive system may include a battery for supplying power to the motor. A means for controlling the motor may also be provided to vary the assistance provided by the motor.

The control means may be configured to only provide torque to the spindle when the rider is applying some torque through the crankset by pressing on pedals of the bicycle.

According to a second aspect the invention provides a bike having a frame with a bottom bracket shell, the bottom bracket accommodating the sleeve and the torque transfer system of the electric drive train.

The motor may be located inside the frame of the bicycle or may be mounted outside o the frame. For example, the frame may include at least one tube and the motor may be located inside the tube. This most conveniently may be the seat tube as this allows the motor to be inserted from the end of the tube furthest from the bottom bracket simply by removing the seat post.

A battery of the system may be located outside of the bicycle frame, or within the frame.

The bottom bracket shell may have oversized openings for accommodating the two locating rings.

The shell may be fixed to a bottom bracket axles using an adhesive. This may be a releasable thread locking adhesive, such as that supplied by Loctite ® which is provided in the one or more grooves of the sleeve.

The motor may be arranged such that its rotor is perpendicular to the axis of the sleeve.

According to a third aspect the invention provides a method of assembling a drivetrain of the first aspect of the invention to an electric bicycle, the method comprising: fixing the electric motor to the bicycle frame adjacent a bottom bracket shell of the bicycle such that a first gear of the torque transfer system projects into the bottom bracket shell;
Locating the elongate cylindrical sleeve within the bottom bracket in a position where a second gear of the torque transfer system meshes with the first gear,
Fixing the sleeve in position relative to the bottom bracket shell;
applying adhesive to the grooves or recesses inside the sleeve; and
Inserting a spindle of a crankset into the sleeve.

The method step of adding the adhesive may be performed prior to inserting the sleeve into the bottom bracket or after. The other steps may be performed in the order set out in the statement of the previous paragraph, although it is possible to insert the sleeve prior to fixing the motor.

The method may comprise fixing the second gear to the sleeve through a clutch.

The method may comprise setting the position of the sleeve using a spacer and a locating ring that engages with the bottom bracket shell.

There will now be described, by way of example only, one embodiment of the present invention with reference to and as illustrated in the accompanying drawings of which:
**Figure 1** is an exploded view of the component parts of an exemplary drive system for an electric bicycle along with a part of a bicycle frame configured to receive the system;
**Figure 2** shows the relative positioning of the components of the drive system in use fitted to a bicycle frame;
**Figure 3** is a plan view of a sleeve of the drive system; and
**Figure 4** is a cross sectional view of the sleeve showing the internal circumferential grooves for receiving glue;
**Figure 5** shows in cross section the sleeve fitted to the spindle with the other components not shown for clarity; and
**Figure 6** is a cross section view of the sprag clutch and bevel gear that is fixed to the sleeve.

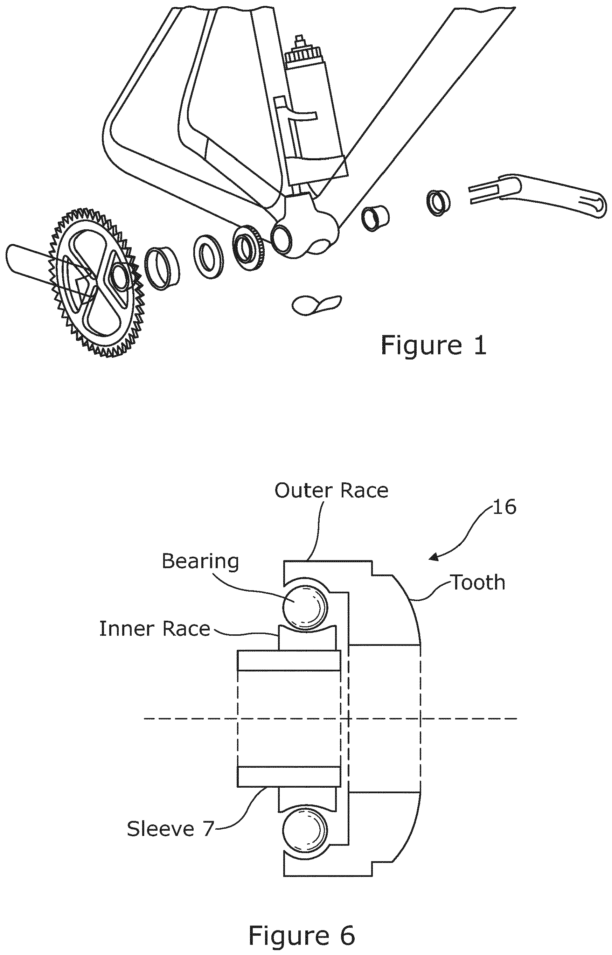

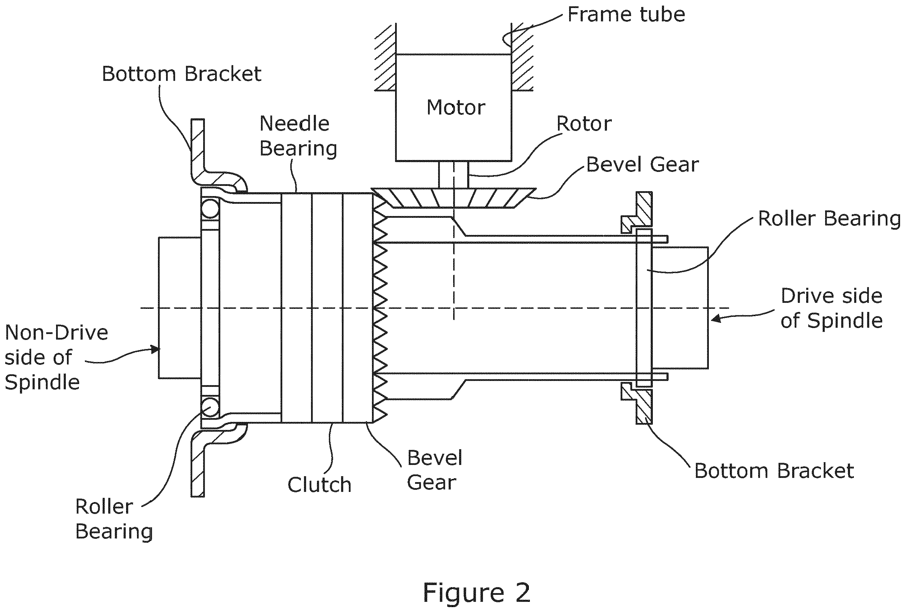

Figure 1 show in an exploded conceptual view the key components of an electric bike drive system. The system is intended to be fitted into a space within the bottom bracket and either a downtube or a seat tube of a conventional diamond shaped bicycle frame, but can be fitted to other less conventional bicycle frame shapes. It is also possible for at least part of the system to be located outside of the bicycle frame. In the example shown, the system fits within the seat tube with a battery of the system located outside of the frame disguised as a water bottle. Figure 2 shows the components in assembled state with the frame omitted for clarity.

The system has three main component parts. A battery provides a source of energy, a motor which provides an assistance torque to help the rider to propel the bicycle, and a transfer assembly that transfers the torque from the motor through to a crankset of the bicycle. The torque applied to the crankset can then be transferred to the rear wheel of the bicycle through any conventional bicycle drivetrain. This will most commonly comprise a chainring of the crankset, a chain and a rear sprocket or set of sprockets forming a rear cassette.

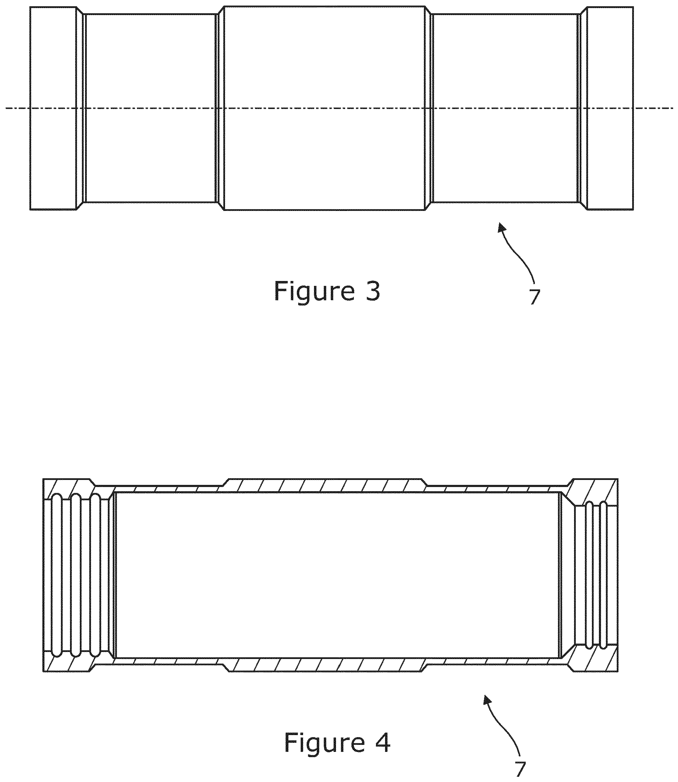

A key feature of the invention as shown in the embodiment of the drawings is the use of a special sleeve that sits around a conventional spindle of the crankset within the bottom bracket and forms part of the transfer assembly. The sleeve is shown in plan and in cross section in Figures 3 and 4.

The outer surface of the sleeve has a raised land at the centre that has a larger diameter than the surface of the sleeve to either side. An annular one way clutch assembly is secured to this land through an interference fit between an inner surface of a first race of the clutch assembly. The second race of the clutch carries a set of teeth forming a bevel gear. These teeth extend around the whole circumference of the sleeve and can move relative to the sleeve in one direction but cannot move relative to the sleeve in the other direction because of the action of the clutch.

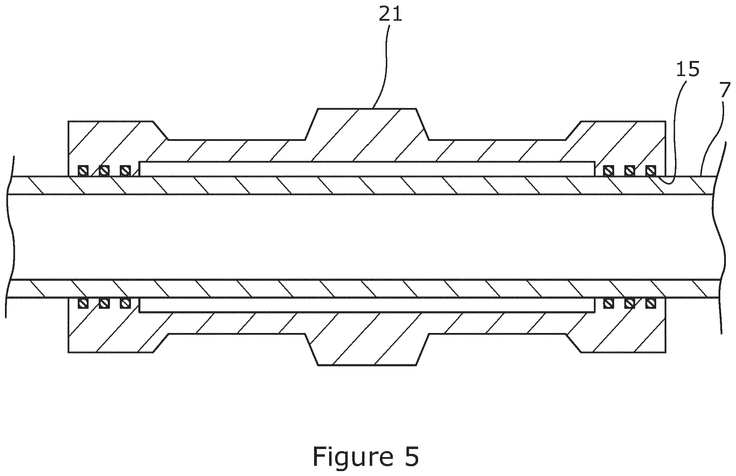

The sleeve comprises a hollow cylindrical tube. The sleeve is secured to the spindle using a releasable adhesive such as Loctite ®. This is shown in Figure 5.

The system also includes an elongate tubular electric motor having a stator and a rotor. The rotor of the motor carries a bevel gear. This meshes with a further bevel gear that is fixed to one side of a sprag clutch carried by the sleeve so that the axis of the two bevel gears intersect. Rotation of the motor rotor transfers torque to the bevel gears. Figure 6 shows in cross section the annular sprag clutch and the combined bevel gear. An inner race of the sprag clutch is fixed to the sleeve and the outer race carries the bevel gear teeth.

The function of the clutch is to cause torque from the rotor to be transferred through the clutch to the sleeve only when the motor is rotating in one direction and when the second gear spins faster than the sleeve, but prevents torque being transferred to the sleeve when the motor is rotating in the opposite direction or when the second gear is rotating slower than the sleeve.

To ensure that the bevel gears are fully meshed, an annular spacer is provided which sits around the sleeve within the bottom bracket shell and extends between the clutch and an open end of the bottom bracket. A locating ring is provided which engages the open end of the bottom bracket. The locating ring presses on the clutch to press the second gear into engagement with the first gear. To prevent the spacer binding with the clutch a thrust bearing assembly is provided between the spacer and the clutch. In the example this comprises an annular needle bearing assembly where the needles are supported by an annular bearing race that butts up to the clutch and the needles directly contact and end face of the spacer. This can be seen in Figures 1 and 2 of the drawings.

A method of assembly of the drive system to the bicycle can be performed by following these steps.

Firstly, the motor is fitted into the frame of the bicycle so that the bevel gear carried by the rotor projects into the bottom bracket shell. The sleeve, prefitted with the clutch, the thrust bearing and the spacer is next pushed into the bottom bracket until the bevel gear carried by the clutch meshes with the bevel gear carried by the motor. The locating ring is then connected to the bottom bracket shall and wound in until a light pressure is applied to the clutch through the spacer, pressing the gears together. This step also fixes the axial location of the sleeve within the bottom bracket shell. Once the position of the sleeve has been set, the surfaces of the spindle and end portions of the sleeve are cleaned and an adhesive is added to the internal grooves at each end of the sleeve and the spindle of the crankset pushed into position through the sleeve. A pair of conventional bearing assemblies are then installed to secure the position of the sleeve prior to the glue setting to hold everything in position.

The method steps can be performed in a different order in other embodiments. For example, the sleeve can be inserted before the motor, and the adhesive can be added to the sleeve at any time.

## Claims

1. An electric bike drive system comprising:
An electric motor having a stator and a rotor which is configured to be secured relative to a bicycle frame,
An elongate tubular sleeve having first and second opposing end portions;
A torque transfer system having an input side fixed relative to the motor rotor, an output side fixed relative to the sleeve, and a coupling between the input side and output side for transferring torque from the motor rotor through the coupling to the sleeve;
in which each end portion of the sleeve is provided with at least one internal groove or recess for receiving adhesive that in use secures the sleeve to a spindle that in turn is connectable to a crankset.

2. An electric bike drive system according to claim 1 in which the internal wall of the sleeve comprises opposed end portions which each have a first inner diameter and a central portion between the end portions which has a second larger diameter.

3. An electric bike drive system according to any preceding claim in which the external wall of the sleeve has a diameter at each end portion and between the end portions and include a central portion which has a larger diameter than the end portions, a respective region between each end portion and the centre portion being of reduced diameter.

4. An electric bike drive system according to claim 2 or claim 3 in which the internal diameter of the end portions of the sleeve is chosen to be slightly oversized relative to the external diameter of the spindle to allow room for a thin layer of adhesive to form.

5. An electric bike drive system according to any preceding claim in which each end portion has two or more grooves.

6. An electric bike drive system according to any preceding claim in which the torque transfer system comprises a gearset comprising a first bevel attached to the rotor of the motor, and a second bevel gear which is fixed to the sleeve, the first bevel gear meshing with the second bevel gear with the axes of the two gears intersecting.

7. An electric bike drive system according to claim 6 in which the second bevel gear comprises a ring of teeth that extend at a constant radius around the axis of rotation of the sleeve.

8. An electric bike drive system according to claim 6 or claim 7 in which the torque transfer system includes a one way clutch which is located in a load path between the second gear and the sleeve so that only torque of one sign can only pass from the second gear to the sleeve through the clutch and torque of the opposite sign is not transferred to the sleeve.

9. An electric bike drive system according to claim 1 in which The clutch may comprise an annular sprag clutch. This may be arranged concentrically with the sleeve with a first bearing race fixed to the sleeve and a second fixed to the second gear. The second gear may be integral to the second bearing race.

10. An electric bike drive system according to any preceding claim which includes a locating means for fixing the position of the sleeve relative to a bottom bracket of the bicycle.

11. An electric bike drive system according to claim 10 when dependent on claim 8 or claim 9 in which the locating means comprises a locating ring which is fixed to the bottom bracket, a spacer, and a thrust bearing assembly where the spacer is located between the thrust bearing assembly and the locating ring, and the needle bearing is located between the spacer and the one way clutch.

12. A electric bike drive system according to claim 1 in which The locating ring may include a recess on a side facing away from the spacer for receiving a bearing race that supports the spindle of a crankset in position within the bottom bracket.

13. A bike having a frame with a bottom bracket shell, the bottom bracket accommodating the sleeve and the torque transfer system of any one of claims 1 to 12.

14. A method of assembling a drivetrain of any one of claims 1 to 12 to an electric bicycle, the method comprising:
fixing the electric motor to the bicycle frame adjacent a bottom bracket shell of the bicycle such that a first gear of the torque transfer system projects into the bottom bracket shell;
Locating the elongate cylindrical sleeve within the bottom bracket in a position where a second gear of the torque transfer system meshes with the first gear,
Fixing the sleeve in position relative to the bottom bracket shell;
applying adhesive to the grooves or recesses inside the sleeve; and
Inserting a spindle of a crankset into the sleeve.

15. The method of claim 14 in which the step of adding the adhesive is performed prior to inserting the sleeve into the bottom bracket.
